# EUROPEAN PATENT SPECIFICATION

(11) **EP 0 927 885 B1**
(45) Date of publication and mention of the grant of the patent: **26.09.2001**
(21) Application number: 99106113.6
(22) Date of filing: 16.01.1998
(51) Int. Cl.: G01N 27/416, G01N 27/06

(54) **Apparatus for measuring conductivity, pH and dissolved oxygen**
Vorrichtung zum Messen der Leitfähigkeit, des pH-Wertes und des Gehalts an gelöstem Sauerstoff
Appareil de mesure de la conductivité, de la teneur en oxygène dissous, et du pH

(30) Priority: 31.01.1997 JP 3302697; 31.01.1997 JP 3302797
(43) Date of publication of application: 07.07.1999
(62) Divisional of application: 98100750.3
(73) Proprietor: HORIBA, LTD., Minami-ku Kyoto (JP)
(72) Inventor: Tarui, Yoshihiro, Minami-ku, Kyoto (JP); Mori, Takeshi, Minami-ku, Kyoto (JP)
(74) Representative: MÜLLER & HOFFMANN Patentanwälte

(56) References cited:
- EP-A- 0 398 634
- US-A- 4 921 582
- US-A- 5 103 179
- US-A- 5 581 189
- CREASON S C ET AL: "Problems and solutions in pH measurement" ISA TRANSACTIONS, 1977, USA, vol. 16, no. 3, pages 67-71, XP002064858 ISSN 0019-0578

## Description

### BACKGROUND OF THE INVENTION

### Field of the Invention

The present invention relates to an apparatus for measuring at least two items of dissolved oxygen, conductivity, and pH, which can selectively measure at least two items of dissolved oxygen amount, conductivity, and pH with the relevant probes when at least two items of the dissolved oxygen probe, conductivity probe, and pH probe are immersed in the same sample.

In particular, the invention relates to apparatus for measuring conductivity and pH, else conductivity and dissolved oxygen according to the preambles of claims 1 and 2.

### Description of the Prior Art

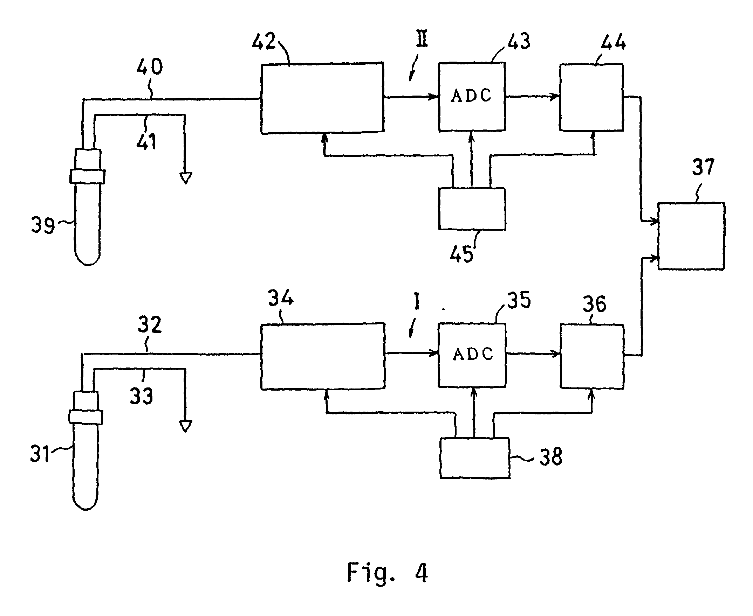

In apparatus of this type, when at least two items of the dissolved oxygen probe, conductivity probe, and pH probe are immersed in the same sample, they exert interference and influences on each other, and this kind of apparatus has been configured as shown in Fig. 4 to Fig. 6.

That is, Fig. 4 shows one example of the configuration of a conventional apparatus for measuring dissolved oxygen or pH, and in Fig. 4, numeral 31 designates a dissolved oxygen probe, to which two signal cables 32, 33 are connected. To one signal cable 32, a current-voltage converter circuit 34 is connected, and behind this circuit 34, an A/D converter circuit 35 is installed, and this circuit 35 is connected to a processor and display unit 37 via a photocoupler 36. Numeral 38 designates the power supply for driving the current-voltage converter circuit 34, A/D converter circuit 35, and photocoupler 36, respectively, and to the other signal cable 33, a reference potential is given.

Numeral 39 is a pH probe, to which two signal cables 40, 41 are connected. To one signal cable 40, an impedance converter circuit 42 is connected, and behind this circuit 42, an A/D converter circuit 43 is installed, and this circuit 43 is connected to the processor and display unit 37 via a photocoupler 44. Numeral 45 designates a power supply for driving the impedance converter circuit 42, A/D converter circuit 43, and the photocoupler 44, respectively. To the other signal cable 41, the reference potential is given.

In the configuration shown in Fig. 4, since a circuit I for measuring dissolved oxygen comprising the dissolved oxygen probe 31, signal cable 32, current-voltage converter circuit 34, A/D converter 35, etc., and a circuit II for measuring pH comprising the pH probe 39, signal cable 40, impedance converter circuit 42, A/D converter circuit 43, etc. are isolated in terms of signal by the photocouplers 36, 44, the pH probe 39, and the dissolved oxygen probe 31 are isolated from each other, and interference and influences can be eliminated.

However, in the configuration shown in Fig. 4 as above, not only A/D converter circuits 35, 43 but also power supplies 38, 45 isolated from each other must be installed to the dissolved oxygen measuring circuit I and pH measuring circuit II, respectively, giving rise to inconvenience of increased component parts and costs as much, as well as increased circuit area. This point remains unchanged even when the dissolved oxygen probe 31 and current-voltage converter circuit 34 are replaced with the conductivity probe and conductivity-voltage converter circuit.

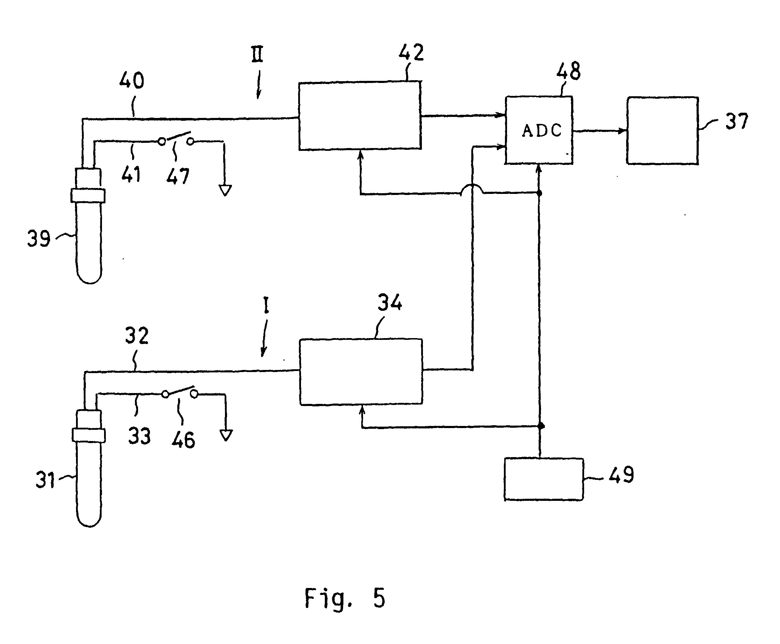

As against this, as shown in Fig. 5, there is a configuration in which switches 46, 47 are intermediately installed to one of the cable signals 33, 41 connected to the dissolved oxygen probe 31 and pH probe 39, respectively, and the switch 47 is turned off (open condition) to isolate the pH probe 39 when the dissolved oxygen is measured, and the switch 46 is turned off to isolate the dissolved oxygen probe 31 when the pH is measured. Numeral 48 designates an A/D converter circuit common for circuits I, II, and numeral 49 designates a power supply for driving the current-voltage converter circuit 34, impedance converter circuit 42, and A/D converter circuit 48, respectively.

In the apparatus configured as shown in Fig. 5 as above, interference and influences of the pH probe 39 in dissolved oxygen measurement and interference and influences of the dissolved oxygen probe 31 in pH measurement can be eliminated, and at the same time, it has another advantage that only one A/D converter circuit 48 or power supply 49 is required, and the configuration can be simplified as much, but it has the following problems.

That is, when the switch 46 is brought to the open state to measure pH, it takes time to stabilize the potential at the dissolved oxygen probe 31 when the switch 47 is being open and the switch 46 is being closed to measure the dissolved oxygen for the next time, constituting an inconvenience that the responsibility is lowered as much.

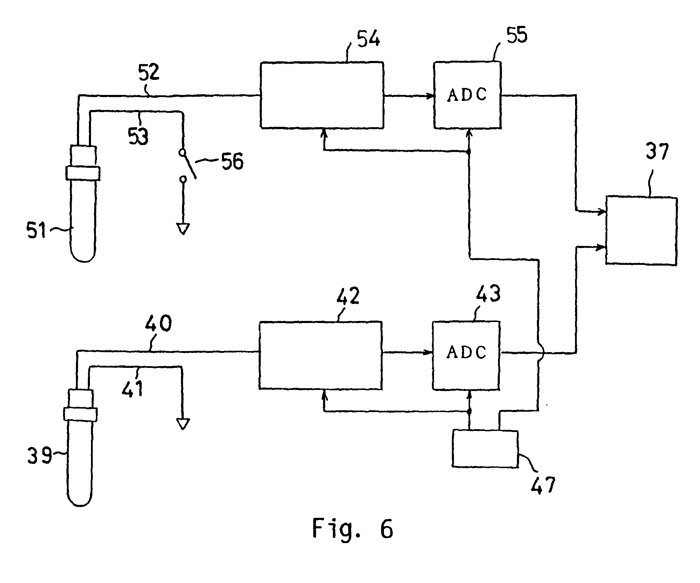

In the conductivity meter shown in Fig. 6, a switch 56 is intermediately installed to the signal cable 53 connected to the conductivity probe 51 so that the conductivity probe 51 can be isolated by turning off the switch 56 during pH measurement. In the apparatus configured as shown in Fig. 6, it is possible to evade the interference and influences in pH measurement and at the same time, it has an advantage that only one power supply 47 is required for driving the conductivity-voltage converter circuit 54, A/D converter circuit 55, impedance converter circuit 52, and A/D converter circuit 43, respectively, and the configuration can be simplified as much, but it has the following problems.

That is, in general, when the switch 56 is electrically controlled, a switch of semiconductors (for example, analog switch) is used in place of the relay switch operating on the electromagnet in order to reduce the power consumption, but when the switch 56 is turned on to measure the conductivity, the ON resistance exerts influence as errors on the measurement results obtained by the conductivity measurement. This error can be cancelled by properly disposing of the processor and display unit 37 but constitutes a problem of complicated processing.

Prior art document US-A-5,103,179 discloses an apparatus for measuring the conductivity, the dissolved oxygen content, and the pH of a sample, using immersible probes. To prevent "cross-talk" between active probes, such as the dissolved oxygen probe and the conductivity probe, and passive probes, such as the pH electrode, the probes are operated only in sequence, and when not in use are electrically isolated from the measuring system.

### SUMMARY OF THE INVENTION

It is a main object of this invention to provide an apparatus for measuring conductivity and pH else conductivity and dissolved oxygen which can eliminate mutual interference and influences and can accurately measure conductivity and pH or dissolved oxygen when the conductivity probe, and the pH probe or the dissolved oxygen probe are immersed in the same sample.

To solve this object, the present invention provides an apparatus as specified in anyone of claims 1 and 2.

In a first embodiment of the invention, the apparatus for measuring the conductivity and pH of a sample comprises a conductivity probe and a pH probe for immersion in the same sample, together with:
means for connecting the conductivity probe to a conductivity-voltage converter; and
means for connecting the conductivity probe to a reference potential wherein
there is a switching means for isolating the conductivity probe from the reference potential during measurement with the pH probe constituted by a non-inverting type operational amplifier, and first and second switches;
the reference potential is connected to the non-inverting input of the operational amplifier;
the conductivity probe is connected to the output of the operational amplifier via the first switch and to the inverting input of the operational amplifier via the second switch; and
the two switches (26,28) open and close simultaneously.

In the apparatus for measuring the conductivity and pH of the said configuration, in the conductivity measurement, when the conductivity is measured, the first and the second switches are turned ON (closed). With this operation, a specified reference potential is applied to the conductivity probe.

In this case, since the output impedance can be reduced as small as possible to turn on the switch, even if the switch is formed with the semiconductor such as analog switch, etc., the influences caused by ON resistance exerted in conductivity measurement become nearly negligible.

In measurement of pH, the said both switches are turned OFF (open). With this operation, the conductivity probe is isolated from the pH measuring circuit, and eliminate interference and influences.

In the second embodiment of the invention means are included to isolate the conductivity probe from the reference potential, when the dissolved oxygen is measured, and to isolate the dissolved oxygen probe and at the same time, to short-circuit the electrodes in this isolated dissolved oxygen probe when the conductivity is measured.

Thus according to the second embodiment of the invention, the apparatus for measuring the conductivity of and the dissolved oxygen in a sample comprises a conductivity probe and a dissolved oxygen probe for immersion in the same sample together with:
means for connecting the conductivity probe to a conductivity-voltage converter; and
means for connecting the conductivity probe to a reference potential; wherein
there is a first switching means for isolating the conductivity probe from the reference potential during measurement with the dissolved oxygen probe constituted by a non-inverting type operational amplifier, and first and second switches;
the reference potential is connected to the non-inverting input of the operational amplifier;
the conductivity probe is connected to the output of the operational amplifier via the first switch and to the inverting input of the operational amplifier via the second switch;
the two switches (26,28) open and close simultaneously; and
there is a second switching means (4,6) for isolating the dissolved oxygen probe and short-circuiting its electrodes during measurement with the conductivity probe.

In this way, it is possible to eliminate interference and influences by the conductivity probe by isolating the conductivity probe from the reference potential when the dissolved oxygen is measured. In measuring the conductivity, since the dissolved oxygen probe is isolated from the reference potential, it is possible to eliminate interference and influences by the dissolved oxygen probe. When the dissolved oxygen is measured from the state where the dissolved oxygen probe is isolated from the reference potential to measure the conductivity, since the electrodes of the isolated dissolved oxygen probe are short-circuited, the potential at the dissolved oxygen probe stabilizes quickly, and the dissolved oxygen measurement can be obtained quickly as much.

In addition, in measuring the conductivity, even if the first and the second switches connected to the conductivity probe are formed with semiconductors such as analog switches, the conductivity measurement is scarcely affected by the ON resistance of the said switches and the measurements can be stabilized as much.

### BRIEF DESCRIPTION OF THE DRAWINGS

**Fig. 1** schematically shows the first apparatus for measuring dissolved oxygen or pH;
**Fig. 2** schematically shows the second apparatus for measuring conductivity and pH according to this invention;
**Fig. 3** schematically shows the third apparatus for measuring three items of dissolved oxygen, conductivity and pH according to this invention;
**Fig. 4** schematically shows a conventional apparatus for measuring dissolved oxygen or pH;
**Fig. 5** schematically shows another conventional apparatus for measuring dissolved oxygen or pH; and
**Fig. 6** schematically shows another conventional apparatus for measuring dissolved oxygen or pH.

### DETAILED DESCRIPTION OF THE PREFERRED EMBODIMENTS

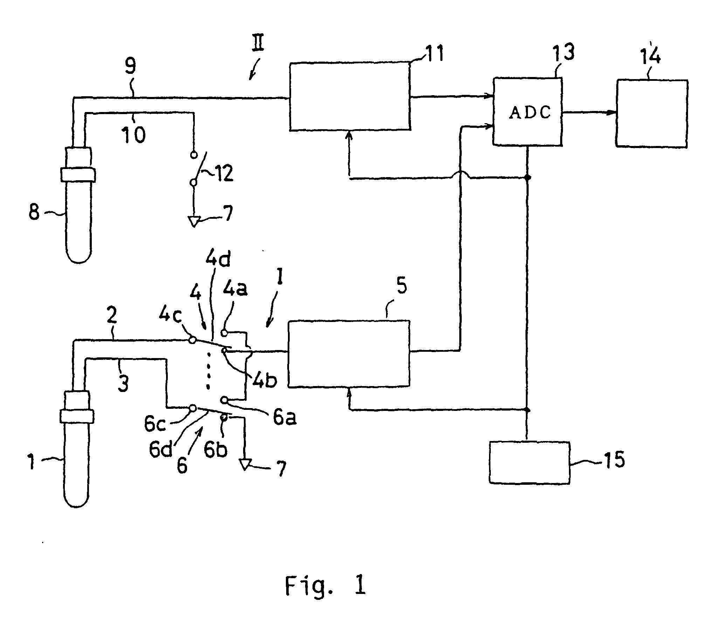

Fig. 1 is useful for understanding the invention but the apparatus shown there does not form part of the invention, and in Fig. 1, numerals I and II designate dissolved oxygen measuring circuit and pH measuring circuit, respectively. First of all, the configuration of the dissolved oxygen measuring circuit I is described. This dissolved oxygen measuring circuit I is designed to measure the current of the dissolved oxygen probe 1, and to the circuit, two signal cables 2, 3 are connected. To one of the signal cable 2, a current-voltage converter circuit 5 is connected via a first selector switch 4.

More specifically, the first selector switch 4 comprises an "a" contact terminal 4a, "b" contact terminal 4b, terminal 4c, and switching piece 4d. The terminal 4c is connected to the signal cable 2 and the "a" contact terminal 4a is connected to the "a" contact terminal 6a of the second selector switch 6 later described, while the "b" contact terminal 4b is connected to the current-voltage converter circuit 5.

To the other signal cable 3, a reference potential 7 is connected via a second selector switch 6. More specifically, the second selector switch 6 comprises an "a" contact terminal 6a, "b" contact terminal 6b, terminal 6c, and switching piece 6d. The terminal 6c is connected to the signal cable 3 and the "a" contact terminal 6a is connected to the "a" contact terminal 4a of the first selector switch 4, while the "b" contact terminal 6b is connected to the reference potential 7. This reference potential 7 is the reference potential of the whole circuit, and is equivalent to the input reference potential of the A/D converter circuit 13 which is later described.

The selector switches 4, 6 operate as follows. That is, when the section 4d of the first selector switch 4 comes in contact with the "b" contact terminal 4b to connect the dissolved oxygen probe 1 to the current-voltage converter circuit 5 via the signal cable 2, the section 6d of the second selector switch 6 is designed to come in contact with the "b" contact terminal 6b to apply the reference potential 7 to the dissolved oxygen probe 1 via the signal cable 3, and when the section 4d comes in contact with the "a" contact terminal 4a and the dissolved oxygen probe 1 is isolated from the current-voltage converter circuit 5, the section 6d comes in contact with the "a" contact terminal 6a and the dissolved oxygen probe 1 is isolated from the reference potential 7 and is changed over in such a manner to short the two electrodes (not illustrated) in the dissolved oxygen probe 1. This change-over operation takes place on the basis of the commands from the processor and control unit 14 later discussed.

Next discussion will be made on the configuration of the pH measuring circuit II. Numeral 8 designates a pH probe, to which two signal cables 9, 10 are connected. To one of the signal cable 9, an impedance converter circuit 11 is connected. The other signal cable 10 is connected to the reference potential 7 via the switch 12.

A numeral 13 designates an A/D converter circuit used in common for the dissolved oxygen measuring circuit I and the pH measuring circuit II, and though it is not illustrated in detail, on its input side, a selector switch (for example, analog multiplexer) is installed, and is designed to convert the analog signal from both circuits I and II alternatively into digital signal, and output to the processor and control unit 14. The processor and display unit 14 comprises, for example, a microcomputer, has capabilities to process the inputted signals, display processing results, and store them in memory, as well as has various control capabilities.

Numeral 15 designates the power supply, which drives the current-voltage converter circuit 5, impedance converter circuit 11, A/D converter circuit 13, etc..

Description will be made on the operation of the apparatus for measuring dissolved oxygen and pH which is configured as described above. Now, assume that the dissolved oxygen probe 1 and the pH probe 8 are simultaneously immersed in the same sample not illustrated. When pH is measured under this kind of condition, the switch 12 in the pH measuring circuit II is turned ON (closed) and the reference potential 7 is connected to the pH probe 8. On the other hand, in the dissolved oxygen measuring circuit I, the first switch 4 and the second switch 6 are changed over, and the terminals 4c, 6c and the "a" contacts 4a, 6a are connected, respectively, to isolate the dissolved oxygen probe 1 from the pH measuring circuit II, and at the same time to short two electrodes in the isolated dissolved oxygen probe 1.

Under the above condition, the output signal from the pH probe 8 is inputted into the A/D converter circuit 13 via the impedance converter circuit 11 and the converted output is inputted into the processor and control unit 14, and the pH results of the sample are thereby obtained. In this event, since the dissolved oxygen probe 1 is isolated from the pH measuring circuit II. interference and influences by the dissolved oxygen probe 1 on the pH measurement are eliminated, and highly accurate measurement is achieved.

When dissolved oxygen is measured, the switch 12 in the pH measuring circuit II is turned OFF (opened) to isolate the pH probe 8 from the dissolved oxygen measuring circuit I. On the other hand, in the dissolved oxygen measuring circuit I, the first switch 4 and the second switch 6 are changed over, the terminals 4c, 6c and "b" contacts 4b, 6b are connected, respectively, to connect the dissolved oxygen probe 1 to the current-voltage converter circuit 5, and at the same time to apply the reference potential 7 to the dissolved oxygen probe 1.

Under the above condition, the output signal from the dissolved oxygen probe 1 is inputted to the A/D converter circuit 13 via the current-voltage converter circuit 5, and the converted output is inputted into the processor and control unit 14, and the amount of dissolved oxygen in the sample is thereby able to be obtained. In this event, since the pH probe 8 is isolated from the dissolved oxygen measuring circuit I, interference and influences on the dissolved oxygen measurement by the pH probe 8 are eliminated, and highly accurate measurement takes place. When the dissolved oxygen measurement condition is achieved, it is possible to obtain the dissolved oxygen measurements at a high response rate because the dissolved oxygen probe 1 is shorted when pH is measured.

In the above apparatus because only one A/D converter circuit 13 is required and at the same time, only one power supply 15 is required for driving the current-voltage converter circuit 5, impedance converter circuit 11, and A/D converter circuit 13, the whole circuit configuration can be simplified, and the circuit can be downsized.

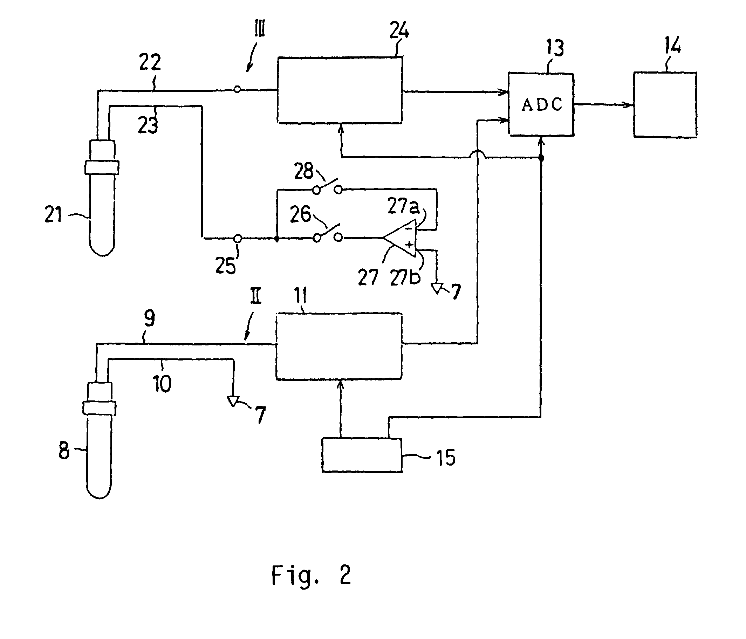

Fig. 2 shows an embodiment of this invention, and in Fig. 2 numerals II, III designate the pH measuring circuit and conductivity measuring circuit, respectively. Since the members carrying the like reference characters in Fig. 1 designate like or corresponding members, the detailed description thereof is omitted. Now description is made on the configuration of the conductivity measuring circuit III. This conductivity measuring circuit III is configured to measure the current that flows when the specified voltage is applied to the conductivity electrode. That is, numeral 21 designates the conductivity probe, to which two signal cables 22, 23 are connected. To one signal cable 22, a conductivity-voltage converter circuit 24 comprising, for example, a constant voltage current-voltage converter circuit for measuring the current flowing in the conductivity probe 21 is installed.

The other signal cable 23 is connected to the terminal 25 for providing the reference voltage dedicated to the conductivity measurement, and to this terminal 25, the output side of the non-inverting type OP AMP 27 is connected via the first switch 26 comprising, for example, an analog switch. Between the inverting input terminal 27a of this non-inverting type OP AMP 27 and the terminal 25, the second switch 28 which is turned ON or OFF simultaneously with the first switch 26 is intermediately installed. To the non-inverting input terminal 27b of the non-inverting type OP AMP 27, the pH measuring circuit II, A/D converter circuit 13, etc. similar to those of Fig. 1 are connected to the reference potential 7 common to the whole circuit. The ON-OFF switching control of the first switch 26 and the second switch 28 is carried out on the basis of the commands from the processor and control unit 14.

In this embodiment, the power supply 15 drives the conductivity-voltage converter circuit 24, impedance converter circuit 11, A/D converter circuit 13, etc..

The operation of the apparatus configured as above for measuring the conductivity and pH is described. Now, assume the conductivity probe 21 and the pH probe 8 are simultaneously immersed in the same sample not illustrated. When pH is measured under this condition, the first switch 26 and the second switch 28 are turned OFF (open condition). With this operation, the conductivity probe 21 is isolated from the pH measuring circuit II. The output signal from the pH probe 8 is inputted into the A/D converter circuit 13 via the impedance converter circuit 11, and the converted output is inputted into the processor and control unit 14, and the pH results of the sample is thereby obtained. In this event, since the conductivity probe 21 is isolated from the pH measuring circuit II, interference and influences caused by the conductivity probe side on the pH measurement are eliminated, and highly accurate measurement takes place.

When the conductivity is measured, switches 26, 28 are turned ON (closed condition). With this operation, the specified reference potential is applied to the conductivity probe 1. The current that flows when this specified voltage is applied is converted into voltage in the conductivity-voltage converter circuit 24, and after it is further A/D converted, it is inputted into the processor and control unit 14, and the conductivity of the sample is determined. In this event, by turning the switches 26, 28 ON since it is possible to turn on the switch with the output impedance held as small as possible by bringing the voltage of the terminal 25 to the level same as that of the reference potential 7 by the action of the non-inverting type OP AMP 27, the influence of the ON resistance of the switch 26 (voltage drop caused by minor current flowing the switch 28 can be ignored because the input impedance of the inverting input terminal 27a is high) can be brought to the nearly negligible level, and highly accurate measurement can be carried out.

In the above embodiment, since only one A/D converter circuit 13 is required as well as only one power supply 15 for driving the conductivity-voltage converter circuit 24, impedance converter circuit 11, and A/D converter circuit 13 is required, the whole circuit configuration can be simplified, and the circuit area can be reduced.

Because the non-inverting type OP AMP 27 is intermediately installed to one signal cable 23 of the conductivity probe 21 as described above, the measurement is scarcely subject to the ON resistance when switches 26, 28 are turned ON, and consequently, it is possible to reduce the consumption power using the analog switch with comparatively large ON resistance of switches 26, 28, but relay switches with small ON resistance may be used for switches 26, 28.

When the input impedance of the inverting input terminal 27a of the said OP AMP 27 is significantly high, said switch 28 may be omitted (such apparatus without switch 28 is not covered by the claims). When the switch 28 is installed as in the case of the present embodiment, it is the old trick to connect input terminals 27a to 27b of OP AMP 27 at high resistance.

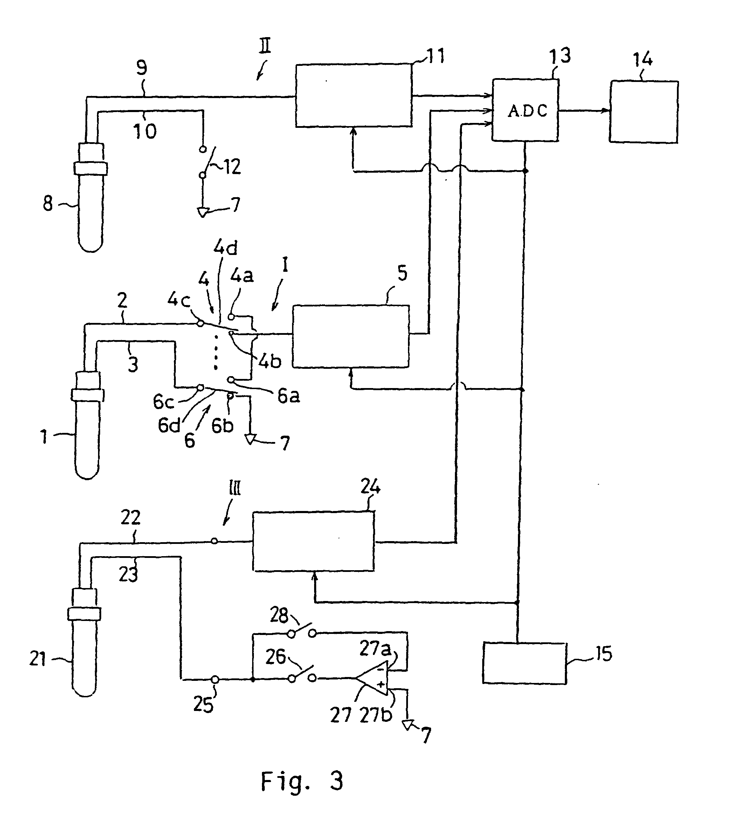

Fig. 3 shows a further embodiment according to this invention, indicating the apparatus for measuring all three of dissolved oxygen, conductivity, and pH. In Fig. 3, members carrying the same reference characters in Fig. 1 and 2 designate like or corresponding members, and the description is omitted.

By connecting as shown in Fig. 3, interference and influences caused by the conductivity probe 21 and pH probe 8 can be eliminated by isolating the conductivity probe 21 and pH probe 8 from the reference potential 7 when the dissolved oxygen is measured. Interference and influences caused by the dissolved oxygen probe 1 and the conductivity probe 21 can be eliminated by isolating the dissolved oxygen probe 1 and the conductivity probe 21 from the reference potential 7 when the pH is measured. In addition, interference and influences caused by the dissolved oxygen probe 1 and the pH probe 8 can be eliminated by isolating the dissolved oxygen probe 1 and the pH probe 8 from the reference potential 7 when the conductivity is measured.

And because the signal cables 2, 3 of the dissolved oxygen probe 1 are shortcircuited with the dissolved oxygen probe 1 isolated from the reference potential 7 in order to measure pH or conductivity, when the circuit is changed over from this condition to the state for carrying out conductivity measurement, the potential in the dissolved oxygen probe 1 can be stabilized quickly when the signal cables 2, 3 of the dissolved oxygen probe 1 are connected to the reference potential 7 and the current-voltage converter circuit 5, respectively. and the dissolved oxygen measurement can be obtained as much.

In addition, even if the first and the second switches 26, 28 connected to the conductivity probe 21 are formed by semiconductors such as analog switches, etc. in measuring the conductivity, influences by the ON resistance of the switches 26, 28 are scarcely exerted on the conductivity measurement, and the measurement can be stabilized as much.

In this embodiment, an example in which the three probes 1, 8, 21 are immersed in the same sample, but it should be expressly understood that this invention shall not be limited to this but may be the apparatus for measuring the conductivity and dissolved oxygen as described in claim 2.

In each of the above-mentioned embodiments, for the A/D converter circuit 13, a selector switch is installed on the input side, but in place of this, a selector switch may be installed separately and the A/D converter circuit 13 without the selector switch may be used.

This invention can implement in the form described above and can take the following effects.

Because in the apparatus for measuring the conductivity and pH, the reference potential is designed to be provided to the conductivity probe via a circuit compounding the non-inverting type OP AMP with the switch at the time of conductivity measurement and the said switch is turned off to isolate the conductivity probe from the pH measuring circuit at the time of pH measurement, pH measurement, and conductivity measurement can be carried out highly accurately.

That is, with this invention, the circuit configuration can be simplified and the inexpensive equipment as a whole can be obtained.

Similar effects can be achieved with the apparatus for measuring dissolved oxygen and conductivity, and the apparatus for measuring dissolved oxygen, conductivity, and pH.

## Claims

1. Apparatus for measuring the conductivity and pH of a sample comprising a conductivity probe (21) and a pH probe (8) for immersion in the same sample, **characterized by:**
means (22) for connecting the conductivity probe to a conductivity-voltage converter (24): and
means (23) for connecting the conductivity probe to a reference potential (7), wherein:
switching means (25, 26, 27, 28) for isolating the conductivity probe from the reference potential during measurement with the pH probe is constituted by a non-inverting type operational amplifier (27), and first and second switches (26, 28): and the reference potential is connected to the non-inverting input (27b) of the operational amplifier (27);
said conductivity probe (21) is connected to the output of the operational amplifier via the first switch (26) and to the inverting input (27a) of the operational amplifier via the second switch (28); and
said two switches (26, 28) open and close simultaneously.

2. Apparatus for measuring the conductivity of and the dissolved oxygen in a sample comprising a conductivity probe (21) and a dissolved oxygen probe (1) for immersion in the same sample, **characterized by:**
means (22) for connecting the conductivity probe to a conductivity-voltage converter (24); and
means (23) for connecting the conductivity probe to a reference potential (7), wherein:
a first switching means (25, 26, 27, 28) for isolating the conductivity probe from the reference potential during measurement with the dissolved oxygen probe is constituted by a non-inverting type operational amplifier (27), and first and second switches (26, 28);
the reference potential is connected to the non-inverting input (27b) of the operational amplifier (27);
the conductivity probe (21) is connected to the output of the operational amplifier via the first switch (26) and to the inverting input (27a) of the operational amplifier via the second switch (28);
said first and second switches (26, 28) open and close simultaneously; and
a second switching means (4, 6) isolates the dissolved oxygen probe and short-circuits its electrodes during measurement with the conductivity probe.

## Patentansprüche

1. Vorrichtung zum Messen der Leitfähigkeit und des pH-Wertes einer Probe,
mit einer Leitfähigkeitssonde (21) und einer pH-Sonde (8) zum Eintauchen in dieselbe Probe,
**gekennzeichnet durch**:
- eine Einrichtung (22) zum Verbinden der Leitfähigkeitssonde mit einem Leitfähigkeits-Spannungswandler (24),
- eine Einrichtung (23) zum Verbinden der Leitfähigkeitssonde mit einem Bezugspotenzial (7),
- eine Schalteinrichtung (25, 26, 27, 28) zum Isolieren der Leitfähigkeitssonde vom Bezugspotenzial während einer Messung mit der pH-Sonde, welche gebildet wird von einem nichtinvertierenden Operationsverstärker (27) sowie ersten und zweiten Schaltern (26, 28), wobei das Bezugspotential mit dem nichtinvertierenden Eingang (27b) des Operationsverstärkers (27) verbunden ist,
- wobei die Leitfähigkeitssonde (21)über den ersten Schalter (26) mit dem Ausgang des Operationsverstärkers und über den zweiten Schalter (28) mit dem invertierenden Eingang (27a) des Operationsverstärkers verbunden ist und
- wobei die zwei Schalter (26, 28) sich simultan öffnen und schließen.

2. Vorrichtung zum Messen der Leitfähigkeit und von gelöstem Sauerstoff in einer Probe,
mit einer Leitfähigkeitssonde (21) und einer Sonde (1) für gelösten Sauerstoff zum Eintauchen in dieselbe Probe,
**gekennzeichnet durch :**
- eine Einrichtung (22) zum Verbinden der Leitfähigkeitssonde mit einem Leitfähigkeits-Spannungswandler (24),
- eine Einrichtung (23) zum Verbinden der Leitfähigkeitssonde mit einem Bezugspotenzial (7),
- eine Schalteinrichtung (25, 26, 27, 28) zum Isolieren der Leitfähigkeitssonde vom Bezugspotenzial während einer Messung mit der Sonde für gelösten Sauerstoff, welche gebildet wird von einem nichtinvertierenden Operationsverstärker (27) sowie ersten und zweiten Schaltern (26, 28), wobei das Bezugspotential mit dem nichtinvertierenden Eingang (27b) des Operationsverstärkers (27) verbunden ist,
- wobei die Leitfähigkeitssonde (21) über den ersten Schalter (26) mit dem Ausgang des Operationsverstärkers und über den zweiten Schalter (28) mit dem invertierenden Eingang (27a) des Operationsverstärkers verbunden ist,
- wobei die zwei Schalter (26, 28) sich simultan öffnen und schließen und
- wobei eine zweite Schalteinrichtung (4, 6) die Sonde für gelösten Sauerstoff isoliert und ihre Elektroden während einer Messung mit der Leitfähigkeitssonde kurzschließt.

## Revendications

1. Appareil pour mesurer la conductivité et le pH d'un échantillon, comprenant une sonde (21) de conductivité et une sonde (8) de pH à plonger dans le même échantillon, **caractérisé par** :
un moyen (22) pour connecter la sonde de conductivité à un convertisseur (24) de conductivité en tension; et
un moyen (23) pour connecter la sonde de conductivité à un potentiel de référence (7), dans lequel :
un moyen de commutation (25, 26, 27, 28) pour isoler la sonde de conductivité du potentiel de référence pendant la mesure avec la sonde de pH est constitué par un amplificateur opérationnel (27) du type non-inverseur, et par un premier et un second commutateurs (26, 28) ; et le potentiel de référence est connecté à l'entrée non inverseuse (27b) de l'amplificateur opérationnel (27) ;
ladite sonde (21) de conductivité est connectée à la sortie de l'amplificateur opérationnel par l'intermédiaire du premier commutateur (26) et à l'entrée inverseuse (27a) de l'amplificateur opérationnel par l'intermédiaire du second commutateur (28) ; et
lesdits deux commutateurs (26, 28) s'ouvrent et se ferment simultanément.

2. Appareil pour mesurer la conductivité d'un échantillon et l'oxygène dissous dans l'échantillon, comprenant une sonde (21) de conductivité et une sonde (1) d'oxygène dissous à plonger dans le même échantillon, **caractérisé par** :
un moyen (22) pour connecter la sonde de conductivité à un convertisseur (24) de conductivité en tension ; et
un moyen (23) pour connecter la sonde de conductivité à un potentiel de référence (7), dans lequel :
un premier moyen de commutation (25, 26, 27, 28) pour isoler la sonde de conductivité du potentiel de référence pendant la mesure avec la sonde d'oxygène dissous est constitué par un amplificateur opérationnel (27) du type non-inverseur, et par un premier et un second commutateurs (26, 28) ;
le potentiel de référence est connecté à l'entrée non inverseuse (27b) de l'amplificateur opérationnel (27) ;
la sonde (21) de conductivité est connectée à la sortie de l'amplificateur opérationnel par l'intermédiaire du premier commutateur (26) et à l'entrée inverseuse (27a) de l'amplificateur opérationnel par l'intermédiaire du second commutateur (28) ; et
lesdits premier et second commutateurs (26, 28) s'ouvrent et se ferment simultanément ; et
un second moyen de commutation (4, 6) isole la sonde d'oxygène dissous et court-circuite ses électrodes pendant les mesures avec la sonde de conductivité.
